# EUROPÄISCHE PATENTSCHRIFT

(11) **EP 1 502 346 B1**
(45) Veröffentlichungstag und Bekanntmachung des Hinweises auf die Patenterteilung: **11.06.2014**
(21) Anmeldenummer: 03737869.2
(22) Anmeldetag: 28.04.2003
(51) Int. Cl.: H02K 5/22

(54) **BLDC-MOTORBAUGRUPPE**
BLDC MOTOR SUBASSEMBLY
SOUS-GROUPE DE MOTEUR BLDC

(30) Priorität: 29.04.2002 DE 10219061
(43) Veröffentlichungstag der Anmeldung: 02.02.2005
(73) Patentinhaber: Schaeffler Technologies GmbH & Co. KG, 91074 Herzogenaurach (DE)
(72) Erfinder: HIRT, Joachim, 77704 Oberkirch (DE); ESLY, Norbert, 77815 Bühl (DE)
(86) Internationale Anmeldenummer: PCT/DE2003/001363
(87) Internationale Veröffentlichungsnummer: WO 2003/094324

(56) Entgegenhaltungen:
- EP-A- 0 667 279
- DE-A- 3 629 049
- DE-A1- 10 047 125
- US-A- 5 505 547
- US-A- 5 952 751

## Beschreibung

Die Erfindung betrifft eine BLDC-Motorbaugruppe.

Aus dem Stand der Technik sind Motorbaugruppen bekannt. Beispielsweise ist für Lenkhilfeeinrichtungen eine Motorbaugruppe aus der US 5,505,547 bekannt, bei der ein Lager auf der Rotorwelle aufgenommen und mittels eines Umformverfahrens axial gesichert ist. Umformverfahren sind allgemein aus der DE 100 47 125 A1 und bei Elektromotoren insbesondere an deren Rotoren aus der DE 36 29 049 A1 und der US 5 952 751 bekannt.

Das Dokument EP-A-0 667 279 beschreibt eine BLDC-Motorbaugruppe, mit einer Stator-Spuleneinrichtung und einer relativ zu dieser Stator-Spuleneinrichtung drehbar gelagerten Motorwelle, die drehfest mit einem Rotor-Magnetpaket gekoppelt ist, wobei die Motorwelle über eine Lageranordung drehbar gelagert ist, und ein Stecker-Leadframe vorgesehen ist, wobei das Stecker-Leadframe 95einen Lageraufnahmebereich aufweist, an dem sich ein Lager in axialer sowie radialer Richtung abstützt, und dass der Stecker-Leadframe den elektrischen Anschluss der Motorbaugruppe bildet. Bei dieser bekannten Vorrichtung werden die Sensoren zur Ermittlung der Lage- und/oder Richtung und/oder Drehzahl des Rotors von einer Lagervorrichtung getragen.

Aufgabe der Erfindung ist die Weiterbildung derartiger BLDC-Motorbaugruppen.

Diese Aufgabe wird erfindungsgemäß gelöst durch eine BLDC-Motorbaugruppe mit den Merkmalen des Patentanspruches 1.

Bevorzugte Weiterbildungen sind Gegenstand der abhängigen Ansprüche.

Im folgenden werden nun bevorzugte Aspekte der Erfindung anhand der Fig. erläutert, wodurch die Erfindung nicht beschränkt werden soll.

Dabei zeigt:
- Fig. 1: eine beispielhafte, erfindungsgemäße BLDC-Baugruppe in schematischer Darstellung;
- Fig. 2: eine beispielhafte Ausführungsform der Erfindung in schematischer teilweiser Ansicht;
- Fig. 3: eine beispielhafte Ausführungsform der Erfindung in schematischer teilweiser Ansicht;
- Fig. 4: eine beispielhafte Ausführungsform der Erfindung in schematischer teilweiser Ansicht; und
- Fig. 5: eine beispielhafte Ausführungsform der Erfindung in schematischer teilweiser Ansicht.

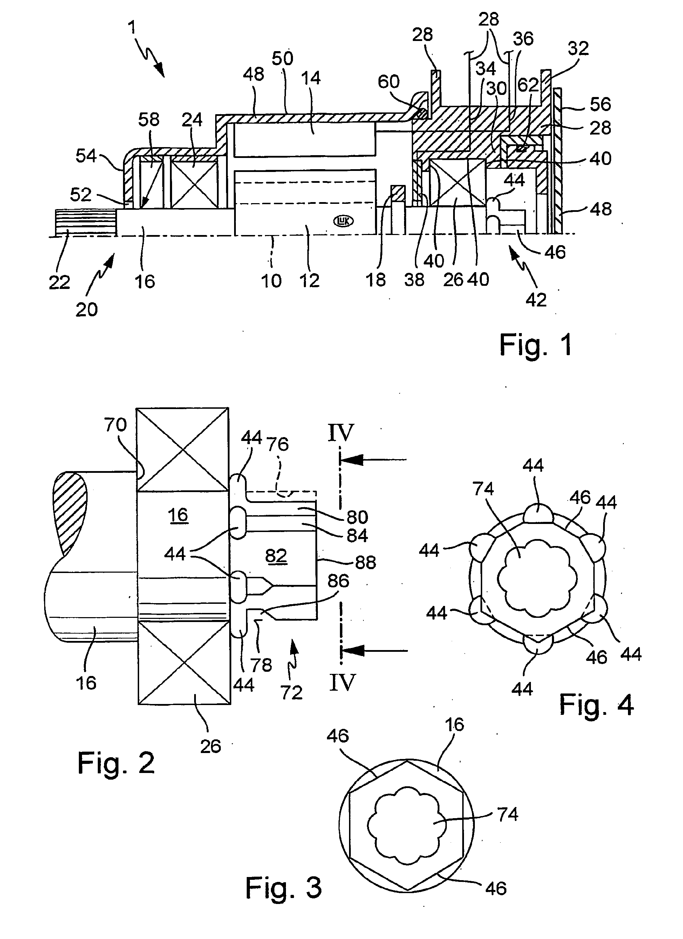

Fig. 1 zeigt eine beispielhafte erfindungsgemäße BLDC-Motorbaugruppe 1 in teilweiser Ansicht. Dargestellt ist insbesondere nur eine Hälfte, wie durch die Achse 10 verdeutlicht wird.

Die BLDC-Motorbaugruppe 1 weist einen Rotor-Magnetpaket 12 und eine Stator-Spuleneinrichtung 14 auf sowie eine Motorwelle 16.

Der Rotor 12 wird von der Motorwelle 16 getragen und ist drehfest sowie axialfest mit dieser verbunden. Er kann gegebenenfalls auch in beschränktem Maße axial verschieblich gegenüber der Motorwelle 16 angeordnet sein.

Beispielsweise ist das Rotor-Magnetpaket 12 mittels Rändelung, Bördeln und / oder einem Absatz auf oder gegenüber der Motorwelle 16 fixiert oder - z.B. im Falle des Absatzes - gegenüber der Welle in seiner Beweglichkeit zumindest eingeschränkt. Es sind auch andere axial- und / oder drehfeste Verbindungen möglich.

Die BLDC-Motorbaugruppe 1 weist ferner eine Steuermagneteinrichtung 18 auf, die in Fig. 1 als Ring von Steuermagneten gestaltet ist.

Diese Steuermagneteinrichtung 18 ist in der Gestaltung gemäß Fig. 1 am Rotor-Magnetpaket 12 angebracht, kann aber auch separat vorgesehen sein.

Die Steuermagneteinrichtung 18 dient, im Zusammenwirken mit weiteren Bauteilen, der Lageermittlung des Rotor-Magnetpakets 12 und / oder der Kommutierung.

Die Motorwelle 16 kann mit einem oder mehreren Absätzen versehen sein oder frei von Absätzen sein.

Auf der Abtriebsseite, und insbesondere am abtriebsseitigen Ende 20, der Motorwelle 16 kann die Mantelfläche dieser Motorwelle 16 profiliert sein. Diese Profilierung kann - je nach Einsatzzweck der BLDC-Motorbaugruppe 1 - insbesondere so sein, das sie eine drehfeste, insbesondere formschlüssige, Verbindung mit einem anzutreibenden Bauteil ermöglicht, oder so, dass sie ein (direktes) Eingreifen in ein relativbeweglich zur Rotorwelle 16 angeordnetes, anzutreibendes Bauteil ermöglicht, um dieses anzutreiben.

Die Profilierung kann auch anderer Art sein oder einem anderen Zweck dienen. Möglich ist auch, dass die Abtriebsseite der Motorwelle 16 frei von Profilierungen ist, oder zumindest frei von Profilierungen der konkret genannten Art.

Die Abtriebsseite der Motorwelle 16 kann auch - mit oder ohne Absätzen versehen - zylindrisch gestaltet sein.

Ferner kann die Abtriebsseite der Motorwelle 16 konisch gestaltet sein, beispielsweise um eine im wesentlichen drehfeste Reibverbindung mit einem anzutreibenden Umbauteil zu ermöglichen.

Die Abtriebsseite kann auch eine Passfedemut aufweisen.

Auch andere Gestaltungen der Abtriebsseite, und insbesondere des abtriebsseitigen Endes 20, der Motorwelle 16 können vorgesehen sein.

In der Gestaltung gemäß Fig. 1 ist auf der Abtriebsseite, und hier insbesondere am abtriebsseitigen Ende 20, der Motorwelle 16 eine Profilierung vorgesehen, die als Kerbverzahnung 22 gestaltet ist.

Die Motorwelle 16 ist drehbar gelagert, und zwar über eine Lageranordnung 24, 26.

Die Lageranordnung 24, 26 weist in der Gestaltung gemäß Fig. 1 ein Loslager 24 auf, das in radialer Richtung Kräfte übertragen kann, sowie ein Festlager 26, das sowohl in radialer als auch in axialer Richtung Kräfte übertragen kann. Dieses Festlager 26 kann auch so gestaltet sein, dass es nur in axialer Richtung Kräfte übertragen kann.

In der Gestaltung gemäß Fig. 1 ist vorgesehen, dass das Loslager 24 zwischen dem abtriebsseitigen Ende 20 der Motorwelle 16 und dem Festlager 26 angeordnet ist. Diese Lager 24, 26 sind in der Gestaltung gemäß Fig. 1 jeweils als Kugellager gestaltet.

Die Loslager 24 sowie das Festlager 26 kann auch anders gestaltet sein, wie beispielsweise als ein im wesentlichen beliebiges Wälzlager, oder als Gleitlager oder als Nadellager. Auch andere als die genannten Lagerarten können als Loslager 24 sowie als Festlager 26 verwendet werden, wobei anzumerken ist, dass das Loslager 24 und das Festlager 26 gleicher Art (im vorgenannten Sinne) sein können, oder unterschiedlicher Art.

Auch die Baugrößen, und insbesondere der Innendurchmesser und / oder der Außendurchmesser, dieser verschiedenen Lager 24, 26 können gleich oder unterschiedlich dimensioniert sein.

In der Gestaltung gemäß Fig. 1 ist die Steuermagneteinrichtung 18 - in axialer Richtung gesehen - zwischen dem Rotor-Magnetpaket 12 und dem Festlager 26 angeordnet.

Die BLDC-Baugruppe 1 weist ferner ein Leadframe bzw. Stecker-Leadframe 28 auf.

Dieses Stecker-Leadframe 28 weist ein Halteteil 30 auf. Ein solches Halteteil 30 kann beispielsweise aus einem elektrisch nicht-leitenden Material gefertigt sein (z.B. Kunststoff). Das Halteteil 30 kann beispielsweise ein Spritzgussteil sein. Es kann aber auch auf andere Art und Weise gefertigt sein.

Weiter weist das Stecker-Leadframe 28 ein Stecker-Gebilde 32 auf. Das Stecker-Gebilde 32 ist mit dem Halteteil 30 verbunden, und zwar insbesondere einstückig. Auch das Stecker-Gebilde 32 kann aus elektrisch nicht-leitendem Material, beispielsweise aus einem Kunststoff, gefertigt sein, und insbesondere als Spritzgussteil.

Das Stecker-Gebilde 32 wird im Rahmen der Fertigung des Stecker-Leadframes 28 an das Halteteil angespritzt. Es kann auch auf andere Weise angebracht und / oder gefertigt werden.

Das Stecker-Leadframe 28 weist ferner elektrisch leitende Stanzgitter 34, 36 auf. Die Stanzgitter 36 sind zumindest teilweise im Halteteil 30 und / oder Stecker-Gebilde 32 angeordnet und ragen aus diesem heraus, und zwar insbesondere im Bereich des Stecker-Gebildes 32.

Das Stanzgitter 34 dient der Weiterleitung von Signalen zwischen der Sensorplatine 38 und einer Steuerelektronik mit Kommutierungselektronik. Das Stanzgitter 36 ist mit den Statorspulen der Stator-Spuleneinrichtung 14 elektrisch leitend verbunden, so dass bei der Bestromung der Statorspulen elektrischer Strom durch das Stanzgitter 36 fließt.

Die Steuerelektronik mit Kommutierungselektronik kann auch vom Stecker-Leadframe 28 aufgenommen werden und/oder oder in dieses integriert sein, was in Fig. 1 nicht gezeigt. Bei einer solchen Gestaltung würde das Ende des Stanzgitters 36, das in Fig. 1 im Bereich des Stecker-Gebilde 32 aus dem Stecker-Leadframe 28 austritt, zur der entsprechenden Position der Steuerelektronik mit Kommutierungselektronik führen, bzw. zu einer Kontaktstelle, von welcher sich eine elektrisch leitende Verbindung zur Steuerelektronik mit Kommutierungselektronik erstreckt.

Weiter nimmt das Stecker-Leadframe 28 die Platine 38 auf, die in alternativer Gestaltung auch von einem anderen Bauteil, wie Gehäuse oder dgl., getragen werden kann. An der Platine 38 sind Sensoren angeordnet. Diese Sensoren können insbesondere Hall-Sensoren sein. Beispielsweise sind drei Hallsensoren an der Platine vorgesehen.

Mittels der Sensoren können Signale bewirkt werden, die zur Ermittlung der Lage- und / oder Richtung und / oder Drehzahl des Rotors verarbeitet bzw. ausgewertet werden können und / oder im Rahmen der Kommutierung.

Auf der Platine 38 ist ferner eine Auswerteelektronik vorgesehen, mittels welcher die Sensorwerte bzw. die vom Sensor bewirkten Signalen ausgewertet werden. Diese Auswerteelektronik kann auch an anderer Stelle angeordnet sein, wie zum Beispiel in der Übertragungsstrecke zwischen der Platine 38 und der Steuerelektronik oder im Bereich der Steuerelektronik.

Die Fixierung der Platine 38 oder anderer Elektronikträger kann über Schrauben, Heißverprägen und auf sonstige Weise erfolgen. Elektrisch leitend kann das Stecker-Leadframe 28 mit der Sensorplatine 38 schon im Vorfeld oder auch nach einer eventuellen Anspritzung des Stecker-Gebildes 32 verbunden werden. Auch andere Gestaltungen sind möglich.

Das Stecker-Leadframe 28 weist einen Lageraufnahmebereich 40 auf, an dem sich das Festlager 26 abstützt, und zwar in axialer sowie radialer Richtung. In der Gestaltung gemäß Fig. 1 ist vorgesehen, dass sich das Festlager in beiden axialen Orientierungen am Stecker-Leadframe 28 abstützt. Der Lageraufnahmebereich kann einstückig gestaltet sein. Der Lageraufnahmebereich 40 kann aus einem elektrisch nicht-leitenden Material, wie Kunststoff gefertigt sein. Insbesondere kann der Lageraufnahmebereich 40 ein Spritzgussteil sein. In der Gestaltung gemäß Fig. 1 ist das Festlager 26 in das Stecker-Leadframe 28 eingespritzt.

Um eine entsprechende Verbindung zwischen dem Stecker-Leadframe 28 und dem Festlager 26 zu erzeugen, könnten beispielsweise auch - aus den entgegengesetzten Orientierungen der axialen Richtung - Schalen an das Lager gesetzt werden, die das an den Rest des Stecker-Leadframe 28 angespritzt werden. Auch andersartige Gestaltungen sind möglich.

Das Stecker-Leadframe 28 kann auch anders aufgebaut und gestaltet sein.

Die axialfeste Verbindung kann auf unterschiedlichste Weise erzeugt werden. In der Gestaltung gemäß Fig. 1 ist diese Verbindung mittels Anstanzung 42 erzeugt. Dies ist so, dass mittels eines Umformwerkzeuges in dem axial an das axial zu sichernde Bauteil, also hier das Festlager 26, angrenzenden Bereich die Gestaltung der Außenoberfläche bzw. die Querschnittsflächen verändert wird, und zwar durch Warmumformung oder durch Kaltumformung. Bei dieser Umformung entstehen radial erhöhte Bereiche 44 der Motorwelle 16, die das Festlager 26 axial halten. Auf der axial abgewandten Seite kann das Festlager 26 axial über einen Absatz oder auf sonstige Weise gehalten werden.

Die Umformung ist insbesondere so, dass metallisches Material der Oberfläche und / oder in oberflächennahen Bereichen gegenüber tieferliegendem Material axial und / oder in Umfangsrichtung und / oder radial verlagert wird, so dass aus diesem verlagerten Material eine Erhöhung in einem, insbesondere anderen, Oberflächenbereich gebildet wird.

Im Rahmen des Umformprozesses kann auch durch Verwendung eines geeigneten - gegebenenfalls auf die Oberflächengestaltung des innenliegenden Bauteils bzw. die Motorwelle 16 abgestimmtes - Umformwerkzeug eine Oberflächengestaltung erzeugt werden, der eine weitere, vorbestimmte Funktion zukommen soll.

Eine Möglichkeit besteht beispielsweise darin - und dies ist in der Gestaltung gemäß Fig. 1 vorgesehen -, dass das Bauteil bzw. die Motorwelle 16 so umgeformt wird bzw. Material so verlagert wird, dass die Erhöhung 44 bzw. Erhöhungen gebildet werden und dabei eine Kontur entsteht, die als Verdrehmitnahme 46 wirken kann. Diese kann - um ein Beispiel von vielen zu nennen - ein AußenSechskant sein.

Möglich ist auch, dass das umzuformende Bauteil bereits vor dem Umformen eine Verdrehmitnahme 46 aufweist, die in dieser Funktion beim Umformen erhalten bleibt. Diese Verdrehmitnahme 46 kann in einem nicht-umgeformten Bereich gegeben sein oder in einem umgeformten. Es kann beispielsweise auch eine Innen-Innenverdrehmitnahme vorgesehen sein, wie beispielsweise Torx oder Innen-Sechskant, die in der Motorwelle 16 integriert ist.

Mittels der Verdrehmitnahme 46 kann beispielsweise eine Notbetätigung der Motorwelle 16 durchgeführt werden. Bei einer solchen Notbetätigung kann mit oder ohne Werkzeug über die Verdrehmitnahme 46 die Motorwelle 16 verdreht werden. Dies kann beispielsweise, aber nicht nur, sinnvoll sein wenn die Stromversorgung der Stator-Spuleneinrichtung 14 nicht funktioniert.

Eine solche Notbetätigung kann beispielsweise, aber nicht nur, sinnvoll sein, wenn die BLDC-Baugruppe 1 zur Steuerung bzw. als Steuerungseinrichtung für ein Automatisiertes Schaltgetriebe oder zur Steuerung bzw. als Steuerungseinrichtung für eine Elektronische Kupplungseinrichtung eingesetzt wird. So kann beispielsweise eine solches Automatisiertes Schaltgetriebe bzw. eine solche Elektronische Kupplungseinrichtung notbetätigt werden, wenn die elektrische Versorgung ungewollt nicht mehr sichergestellt ist.

Diese Möglichkeit mittels Anstanzung ein Bauteil axial zu fangen oder zu fixieren sowie beispielhafte Gestaltungen einer Verdrehmitnahme werden noch anhand der Fig. 2 und 4 weiter beschrieben.

Der Stator 14 weist eine oder mehrere Statorspulen auf. Der Stator 14 bzw. ein Spulenträger des Stators ist kann mit dem Stecker-Leadframe 28 einstückig oder nicht-einstückig verbunden sein, oder von dem Stecker-Leadframe 28 getrennt sein. Möglich ist auch, dass das Stecker-Leadframe 28 nach der Montage am Stator 14 axial stützend anliegt.

Die BLDC-Baugruppe 1 weist ein Gehäuse 48 auf.

In einer alternativen Gestaltung ist ein Gehäuse 48 nicht gegeben. Möglicht ist auch, das die BLDC-Baugruppe 1 kein eigenes Gehäuse aufweist, sondern in ein Gehäuse einer anderen Einrichtung eingesetzt wird. Beispielsweise kann eine erfindungsgemäße BLDC-Baugruppe 1 (ohne eigenes Gehäuse), bei Verwendung zur Steuerung einer elektronisch gesteuerten Kupplung oder eines Automatisierten Schaltgetriebes (ASG), in ein Kupplungsgehäuse oder ein Getriebegehäuse eingesetzt werden. Bei Anwendungen, bei denen die BLDC-Baugruppe 1 in ein Gehäuse einer anderen Einrichtung eingesetzt wird, kann die BLDC-Baugruppe 1 allerdings auch zusätzlich ein eigenes Gehäuse 48 aufweisen.

Das in Fig. 1 dargestellte Gehäuse 48, das grundsätzlich auch anders gestaltet sein kann, weist ein napfförmiges Teil 50 auf mit unterschiedlichen Innendurchmessern bzw. Innenmaßen auf. Weiter weist das Gehäuse 48 eine Austrittsöffnung 52 für die Motorwelle 16 auf. Diese Austrittsöffnung 52 ist im Bodenbereich 54 des napfförmigen Teils 50 vorgesehen.

Die Motorwelle 16 ragt durch die Austrittsöffnung 52 und aus dem Gehäuse 48 heraus, und zwar so, dass ihr abtriebsseitiges Ende 20 außerhalb des Gehäuses 48 angeordnet ist.

Das Gehäuse 48 kann teilweise von dem Stecker-Leadframe 28 und / oder dessen Stecker-Gebilde 32 gebildet werden: Das Stecker-Leadframe 28 kann auch radial außen - zumindest teilweise - vom Gehäuse 48 umgeben sein und sich abstützen. Insbesondere kann das Stecker-Leadframe 28 in das Gehäuse 48 eingepresst sein oder auf ähnliche Art eng am Gehäuse 48 anliegen.

Ferner weist das Gehäuse 48 eine Verschlusseinheit 56 auf, die auf der Gehäuseseite angeordnet ist, die der Austrittsöffnung 52 gegenüberliegt. Diese Verschlusseinheit 56 kann ein Deckel sein oder einen Deckel aufweisen.

Weiter kann vorgesehen sein, dass in dieser Verschlusseinheit 56 bzw. diesem Deckel eine von einem weiteren Deckel abdeckte Öffnung vorgesehen ist. Alternativ kann auch eine anders gestaltetes lösbares Element vorgesehen sein oder ein zerstörbares Element. Dies ermöglicht, dass die Verdrehmitnahme 46 für eine Notbetätigung zugänglich gemacht werden kann. Es kann grundsätzlich auch die Verschlusseinheit auf andere Weise so gestaltet werden, dass die Verdrehaufnahme 46 für eine Notbetätigung zugänglich gemacht werden kann.

In der Gestaltung gemäß Fig. 1 sind Dichteinrichtungen 58, 60, 62 vorgesehen. Diese Dichteinrichtungen 58, 60, 62 können grundsätzlich verschiedenster Art sein. Sofern Dichtungen allerdings zwischen gegeneinander bewegten Teilen angeordnet sind, ist es sinnvoll, diesen Umstand bei der Auswahl der betreffenden Dichtung entsprechen zu berücksichtigen.

In der Gestaltung gemäß Fig. 1 dichtet die Dichtung 58 das Gehäuse 48 gegenüber der Motorwelle 16 ab. Die Dichtung 58 ist axial zwischen dem abtriebsseitigen Ende der Motorwelle 16 und dem Loslager 24 angeordnet. Die Dichtung 60 dichtet das napfförmige Gehäuseteil 50 gegenüber dem Stecker-Leadframe 28 ab und Dichtung 62 das Stecker-Leadframe 28 gegenüber der Verschlusseinheit 56. Sofern ein weiterer - insbesondere lösbarer Deckel in die Verschlusseinheit 56 eingesetzt ist, kann auch vorgesehen sein, dass dieser zusätzliche Deckel gegenüber der Verschlusseinheit 56 mittels einer Dichtung abgedichtet ist.

Die Dichtung 58, 60 können beispielsweise angespritzt sein.

Es kann vorgesehen sein, dass die Dichtung 58 und / oder die Dichtung 60 und / oder eine andere Dichtung an des Stecker-Gebilde 32 angebracht oder angespritzt ist oder am Gehäuse angebracht (z.B. durch Vulkanisieren) ist. Es bestehen auch andere Möglichkeiten.

Die Verschlusseinheit 56 kann drehfest mit dem napfförmigen Teil verbunden sein. Eine solche Verbindung kann eine Schraubverbindung oder eine andere Verbindung sein. Es kann beispielsweise vorgesehen sein, dass sich Schrauben einer solchen Schraubverbindung - axial gesehen - am Stecker-Leadframe 28 vorbei erstrecken.

Solche Schrauben können auch gleichzeitig dazu dienen, um die BLDC-Motorbaugruppe 1 an einer Aufnahme eines Umbauteils zu fixieren. Hierzu kann aber auch eine separater und / oder nicht als Schraubverbindung gestalteter Verbindungsmechanismus vorgesehen sein.

Es kann weiter vorgesehen sein, das die BLDC-Motorbaugruppe 1 mit einer Aufnahme eines Umbauteils gekoppelt ist, wobei eine oder mehrere Kopplungsstellen in einer Ebene angeordnet sind, die im wesentlichen senkrecht zur Längsachse der Motorwelle 16 liegt, und in welcher der Schwerpunkt der BLDC-Motorbaugruppe 1 liegt, oder in der Nähe dieser Ebene. Es kann auch vorgesehen sein, das solche Kopplungsstellen zwischen den axial liegenden Gehäuseendabschnitten vorgesehen sind. Eine Möglichkeit besteht darin, dass solche Kopplungsstellen radial außerhalb und axial innerhalb der Stator-Spuleneinrichtung 14 und / oder des Rotor-Magnetpakets 12 angeordnet sind.

Die Gestaltung des Gehäuses 48 sowie des Stecker-Leadframe 28 kann so sein, dass diese Bauteile drehfest mit einander verbunden sind. Sie kann auch so sein, dass eine Teilbaugruppe, die die Motorwelle 16, das Loslager 24, das Rotor-Magnetpaket 12, die Steuermagneteinrichtung 18, die Platine 38, das Festlager 26 sowie das Stecker-Leadframe 28 aufweist, als vormontierte Einheit im Gehäuse 48 aufgenommen werden kann, und danach zunächst eine Drehbeweglichkeit zwischen dem Stecker-Leadframe 28 gegeben ist, die später festgesetzt werden kann.

Das Stecker-Leadframe 28 kann auch - zumindest, wenn die BLDC-Motorbaugruppe 1 fertig montiert ist - radial fixiert sein, und zwar insbesondere am Gehäuse 48, sowie axial. Insbesondere ist vorgesehen, dass das Stecker-Leadframe 28 nach der Fertigmontage gegenüber dem Gehäuse 48 drehfest angeordnet ist.

Weiter kann vorgesehen sein, dass das Stecker-Leadframe 28 bzw. die Platine 38 gegenüber der Steuermagneteinrichtung 18 bzw. den Steuermagneten ausgerichtet wird, und zwar insbesondere automatisch. Dies kann beispielsweise so sein, dass dieses Ausrichten durch bzw. während eines Bestromens der Stator-Spuleneinrichtung 14 erfolgt. Anschließend kann dann das Stecker-Leadframe 28 bzw. die Platine 38 gegenüber dem Gehäuse 48 radial und / oder drehfest fixiert werden.

Das Gehäuse 48 mit Verschlusseinheit 56 sowie das Stecker-Leadframe 28 (ausgenommen der Stanzgitter) sind vorzugsweise aus Kunststoff gefertigt.

Im folgenden sollen einige beispielhafte Möglichkeiten beschrieben werden, welche zur Fixierung des Stecker-Leadframes 28 bzw. der Platine 38 gegenüber dem Gehäuse gewählt werden können.

Die Stecker-Leadframe 28 kann beispielsweise zwischen der Verschlusseinheit 56 bzw. einem Deckel und dem Gehäuse 48 bzw. dem napfförmigen Teil 50 des Gehäuses 48 verspannt werden, und zwar insbesondere in axialer Richtung. Das Verspannen kann mittels einer Schraubeinrichtung oder dergleichen bewirkt werden.

Möglich ist auch das die Verschlusseinheit 56 oder eine mit dem Stecker-Leadframe 28 festverbunden Scheibe und / oder das Stecker-Leadframe 28 mit dem Gehäuse verstemmt oder auf andere Weise fixiert wird. Ein anderweitiges Fixieren kann beispielsweise ein Verschweißen oder ein Eindrücken eines Gehäuseabschnitts in das Stecker-Leadframe 28 sein. Auch hierbei kann eine axiale und radiale Fixierung in jeweils beiden Orientierungen gegeben sein sowie eine Verdrehsicherung.

Es kann beispielsweise auch vorgesehen sein, dass das Stecker-Leadframe 28 über eine oder mehrere Bajonettverschlussverbindungen mit dem Gehäuse 48 gekoppelt wird und dadurch axial und / oder radial und / oder drehfest fixiert wird, und zwar insbesondere jeweils in beiden Orientierungen. Bei einer solchen Gestaltung oder einer andersartigen kann die Verbindung durch Warmverprägung erzeugt werden.

Es kann insbesondere vorgesehen sein, das an dem Stecker-Gebilde 32 und / oder dem Stecker-Leadframe 28 Kunststoff-Zapfen vorgesehen sind, die sich aus dem Gehäuse 48 und / oder der Verschlusseinheit 56 radial bzw. axial herauserstrecken und mittels ein Warmverprägevorrichtung warmverformt werden, um das Stecker-Leadframe 28 gegenüber dem Gehäuse 48 zu fixieren bzw. an dieses anzuformen. Hierbei kann die Geometrie und / oder eine Bewegung der Warmprägevorrichtung die Position der Verbindungsstelle mitbestimmen.

Beispielsweise können solche Kunststoff-Zapfen im Bereich des Steckers und / oder über den Umfang verteilt angeordnet sein.

Im folgenden soll nun eine beispielhafte Möglichkeit dafür aufgezeigt werden, wie die erfindungsgemäße BLDC-Motorbaugruppe 1 montiert werden kann oder zu einer Baueinheit montiert werden kann.

Gegebenenfalls wird zunächst das Loslager 24 auf die Motorwelle 16 aufgebracht und dort fixiert. Die Fixierung kann beispielweise mittels Passung, Absatz, Aufbördelung oder auf sonstige Weise erzeugt werden. Ferner wird gegebenenfalls die Dichtung 58 auf der Motorwelle 16 angeordnet. Diese Montageschritte können auch später durchgeführt werden. Möglich ist auch das die Dichtung 58 und / oder das Loslager 24 nicht auf die Motorwelle 16 aufgebracht werden sondern in das Gehäuse 48 eingeschoben werden.

Anschließend wird das Rotor-Magnetpaket 12 auf der Motorwelle 16 drehfest - und gegebenenfalls axialfest - an einer vorbestimmten Stelle fixiert.

Anschließend wird die Steuermagneteinrichtung 18 am Rotor-Magnetpaket 12 angebracht.

Es kann vorgesehen sein, dass die Felder und Magnete von Rotor und Steuermagneten bei der Magnetisierung oder mechanisch zueinander ausgerichtet werden.

Nach der Anbringung des Steuermagneteinrichtung 18 am Rotor-Magnetpaket 12 wird die Motorwelle 12 in das Stecker-Leadframe 28 sowie das Festlager 26 eingesteckt.

Dabei kann vorgesehen sein, das die Motorwelle 12 zunächst in das Stecker-Leadframe 28 und anschließend in das Festlager 26 geschoben wird, oder umgekehrt. Danach wird das Festlager 26 in das Stecker-Leadframe 28 eingespritzt bzw. das Stecker-Leadframe 28 an das Festlager 26 angespritzt. Sofern ein Festlager 26 mit Lageraußenring vorgesehen ist, wird insbesondere dieser bzw. ein außenliegender Teil von diesem in das Stecker-Leadframe 28 eingespritzt. Das Einspritzen kann beispielsweise so sein, dass beim Einspritzen in beiden axialen Orientierungen Bereiche des Lageraufnahmebereichs 40 gebildet werden, an denen das Festlager 26 anliegt, oder so dass im Rahmen des Einspritzens nur in einer axialen Orientierung ein solcher Bereich gebildet wird. In der anderen Orientierung kann dieser Bereich bei der letztgenannten Variante bereits vor dem Einspritzen am Stecker-Leadframe 28 gegeben sein.

Eine weitere Möglichkeit besteht darin, dass die Motorwelle 16 in eine Einheit aus Festlager 26 und Stecker-Leadframe 28 eingeschoben wird, wobei hierbei das Einsritzen des Festlagers 26 in das Stecker-Leadframe 28 vor oder nach dem Einschieben der Motorwelle 16 und insbesondere in der oben beschriebenen Weise erfolgen kann.

Die montierte Einheit mit Motorwelle 16, Rotor-Magnetpaket 12, Sensor- bzw. Steuermagneteinrichtung 18, Platine 38, Stecker-Leadframe 28, Festlager 26 und gegebenenfalls Loslager 24 und / oder Dichtung 58 wird in das Gehäuse 48 eingeschoben, und gegebenenfalls über das Stecker-Leadframe 28 verpresst oder verstemmt. Das Loslager 24 wird beim Einschieben durch die Stator-Spuleneinrichtung 14 geschoben, die vor dem Einschieben dieser Einheit in das Gehäuse 48 eingesetzt und dort, durch Verstemmen oder auf andere Art, fixiert ist. Das Loslager 24 kann als Zentrierung beim Einschieben dienen.

Es kann aber auch das Loslager 24 und / oder die Dichtung 58, wie oben erwähnt, schon vorher in das Gehäuse 48 eingeschoben worden sein.

Nach oder im Rahmen des Einschiebens der genannten Einheit in das Gehäuse 48 wird eine elektrisch leitende Verbindung zwischen dem Stanzgitter 36 und der Stator-Spuleneinrichtung 14 erzeugt. Diese ist insbesondere so, dass sie zumindest eine gewisse Relatiwerdrehung zwischen Stator-Spuleneinrichtung 14 und Stecker-Leadframe 28 zulässt. Beispielsweise sind flexible Stränge gegeben. Anschließend wird der Stator bestromt, um die auf der Platine 38 angeordneten Sensoren zur Steuermagneteinrichtung 18 auszurichten, und zwar insbesondere automatisch. Hierdurch kann eine gute Qualität der zur Kommutierung gelieferten Signale erzielt werden. Das Einstellen bzw. Justieren funktioniert so, dass sich durch das Bestromen die Magnete bzw. die Steuermagneteinrichtung 18 über die Lage des Rotor-Magnetpakets 12 zur Stator-Spuleneinrichtung 14 ausrichten. Hierbei kann es zu einer Relatiwerdrehung von Stator-Spuleneinrichtung 14 und Stecker-Leadframe 28 kommen.

In der entsprechenden, justierten bzw. eingestellten Verdrehlage wird das Stecker-Leadframe 28 gegenüber dem Gehäuse fixiert.

Anhand der Fig. 2 bis 4 wird beispielhaft einerseits erläutert, wie das Festlager 26 in der Gestaltung gemäß Fig.1 axial fixiert werden kann, und andererseits, wie ein Verfahren zum axialen Fangen eines Bauteils gestaltet sein kann.

Das Festlager 26 stellt in diesem Sinne ein zweites, mit einer Durchgangsöffnung versehenes Bauteil dar und die Motorwelle 16 ein erstes, metallisches Bauteil.

Das Festlager 26 wird axial auf die Motorwelle 16 geschoben, so dass die Motorwelle 16 von dem Festlager 26 gefangen ist, also durch eine Radialbewegung nicht aus dem Festlager 26 entfernt werden kann.

In Schieberichtung ist die axiale Relativbeweglichkeit zwischen der Motorwelle 16 und dem Festlager 26 beschränkt, und zwar hier durch den Wellenabsatz 70. Diese Beschränkung der Relativbeweglichkeit kann auch durch andere Mittel bewirkt werden. Insbesondere können solche Mittel auch so sein wie es in Bezug auf die Beschränkung der Relativbeweglichkeit in der entgegengesetzten Orientierung im folgenden beschrieben wird.

Zunächst sei allerdings erwähnt, dass der in dieser entgegengesetzten Orientierung gelegene Wellenabschnitt 72 bei aufgeschobenem Festlager 26 zunächst einen Ausgangsquerschnitt und eine Ausgangsgestaltung aufweist, die beispielsweise so sein kann, wie es in Fig. 3 gezeigt ist.

In der Gestaltung gemäß Fig. 3 ist dieser Abschnitt als Sechskant gestaltet; er weist eine Außen-Sechskant-Verdrehmitnahme 46 auf. Bei dieser Gestaltung ist ferner eine Innenverdrehmitnahme 74 vorgesehen. Der Abschnitt kann auch anders gestaltet sein.

Anschließend wird die Motorwelle 16 mittels eines Umformwerkzeuges umgeformt; eine mögliche Gestaltung, die nach diesem Umformen gegeben ist, ist in dem Fig. 2 und 4 gezeigt. In diesen Fig. ist die obere Hälfte jeweils anders gestaltet als die untere, wodurch verschiedene, beispielhafte Gestaltungen angedeutet werden sollen.

Bei diesem Umformen wird, wie durch die gestrichelten Linien 76, 78 angedeutet, im Bereich bzw. in der Nähe der Oberfläche der Motorwelle 16 angeordnetes Material dieser Motorwelle 16- hier - im wesentlichen in Axialrichtung unter Bildung der Erhöhung 44 bewegt. In den in den Fig. 2 bis 4 dargestellten Varianten sind diese Erhöhungen 44, wulstartig und verteilen sich über den Umfang der Rotorwelle 16, die aber auch anders gestaltet werden kann.

Weiter ist in dieser beispielhaften Gestaltung vorgesehen, dass das bewegte Oberflächenmaterial im Bereich der Ecken des Sechskant angeordnet ist; auch dies kann anders gestaltet sein.

In anderen Worten und spezieller ausgedrückt wird in der Gestaltung gemäß den Fig. 2 bis 4 Material der Motorwelle 16 in axialer Richtung gegen das festzusetzende Festlager 26 gedrückt, wobei partiell mehrere Wulste entstehen, die auf die Lagerseite drücken und dieses festlegen.

Wie beispielsweise in Fig. 2 zu erkennen ist, wird während des Umformvorgangs Material der Rotorwelle 16, das im Bereich der Oberfläche angeordnet ist (angedeutet durch gestrichelte Linien 76, 78) gegenüber radial gesehen weiter im Inneren der Motorwelle liegenden Materialbereichen 80, 82 axial verschoben.

Es sei angemerkt, dass, was in Fig. 2 nicht gezeigt ist, der Umformvorgang auch so sein kann, dass die Materialverschiebung in Umfangsrichtung gegeben ist.

In den Figuren 2 bis 4 sind jeweils unterschiedliche Gestaltungsmöglichkeiten zusammengefasst, die auch in Kombination gegeben sein können. Die in der oberen Hälfte der jeweiligen gezeigte Gestaltung unterscheidet sich von der dort in den unteren Hälfte gezeigten Darstellungen dadurch, dass sich die verschobenen Materialbereiche bzw. die Anstanzungen im oberen Fall von dem dem Festlager 24 abgewandten Wellenende 88 bis zur Erhöhung 44 erstrecken, während sich solche Materialbereiche bzw. Anstanzungen 86 im unteren Fall von einer axial zwischen dem Festlager 26 und dem Wellenende 88 angeordneten Stelle zur Erhöhung 44 erstreckt.

Im unteren Fall bleibt die Sechskant-Geometrie auf einem Abschnitt der Welle während des Umformens erhalten, während sich im oberen Fall diese Geometrie ändert.

Fig. 4 zeigt eine Seitenansicht aus Sicht der Linie IV-IV in Fig. 3.

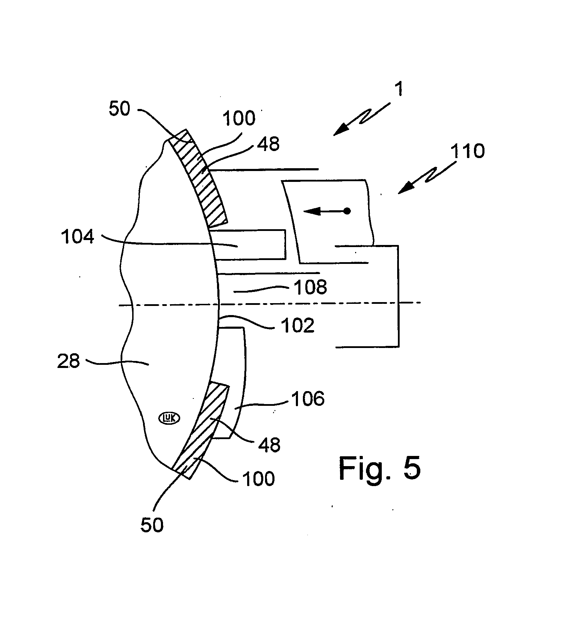

Anhand der Fig. 5, in der diverse Bauteile teilweise bzw. teilgeschnitten dargestellt sind, soll nun im folgenden eine beispielhafte Möglichkeit beschrieben werden, mittels welcher das Stecker-Leadframe 28 gegenüber dem Gehäuse axial und radial sowie in Umfangsrichtung fixiert werden kann.

Dargestellt ist in Fig. 5 eine Außenwand 100 des Gehäuses 48 bzw. des napfförmigen Teils 50 dieses Gehäuses.

Weiter ist in Fig. 5 ein Abschnitt des Stecker-Leadframes 28 gezeigt.

Das Gehäuse 48 ist ebenso wie das Stecker-Leadframe 28 bzw. dessen Halteteil 30 und dessen Steckergebilde 32 aus Kunststoff gefertigt.

Über den Außenumfang 102 des Stecker-Leadframes 28 verteilt sind Zapfen 104, 106 vorgesehen. Die Anzahl dieser Zapfen kann grundsätzlich beliebig sein.

Das Gehäuse 48 weist Öffnungen 106 auf, durch welche sich diese Zapfen 104, 106 erstrecken können, und zwar insbesondere so, dass das Stecker-Leadframe 28 gegenüber dem Gehäuse 48 in gewissem Maße verdreht werden kann, wenn die Zapfen 104, 106 durch die Öffnung 106 ragen.

Es kann z. B. auch vorgesehen sein, dass zwei Zapfen sich paarweise durch eine Öffnung 106 erstrecken.

Möglich ist auch, dass sich mehr als zwei Zapfen 104, 106 durch dieselbe Öffnung 108 erstrecken.

In Fig. 5 ist ferner eine Warmverprägeeinrichtung 110 schematisch angedeutet, die nicht Bestandteil der BLDC-Motorbaugruppe 1 ist, sondern vielmehr ein Werkzeug bzw. ein Montagewerkzeug.

Mittels dieser Warmverprägeeinrichtung 110 werden die Zapfen 104, 106 plastisch verformt und mit dem Gehäuse verbunden. Dies ist in der Gestaltung gemäß Fig. 5 so, dass die Zapfen 104, 106 so plastisch verformt werden, dass sie das Gehäuse von außen hintergreifen.

In Fig. 5 ist dies so, dass die Zapfen 104, 106 jeweils in der Orientierung der Umfangsrichtung des Gehäuses umgelegt werden, die der Öffnung 108 abgewandt ist.

Dieses Warmverprägen wird vorzugsweise vorgenommen, nachdem die oben beispielhaft erwähnte Justierung bzw. Einstellung des Stecker-Leadframes 28 bzw. der Sensoren der Sensorplatine 38 gegenüber den Steuermagneten der Steuermagneteinrichtung 18 stattgefunden hat.

Ein derartiges Warmverprägen kann auch auf unterschiedlichste Art und Weise variiert werden. So können beispielsweise die miteinander warmverprägten Teile andere sein, als diejenigen, auf die in Fig. 5 Bezug genommen wird.

Mittels eines Warmverprägens können an den unterschiedlichsten Stellen einer BLDC-Motorbaugruppe 1 Teile, also insbesondere Kunststoffteile, aneinander fixiert werden.

Weiter kann, um ein weiteres Beispiel der Variation zu nennen, das Umlegen derartiger Zapfen auch alternativ oder ergänzend in anderen Richtungen als der Umfangsrichtung vorgenommen werden. Beispielsweise können solche Zapfen auch in Axialrichtung umgelegt werden.

Es sei allerdings angemerkt, dass nicht unbedingt Zapfen verwendet werden müssen. Es können auch andere Teile verwendet und / oder umgelegt werden.

In Fig. 5 ist der Zapfen 106 bereits umgelegt, so dass hier eine Art gegeben ist, während der Zapfen 104 noch nicht umgelegt bzw. noch nicht warmverprägt ist.

Dabei kann auch eine Art Bajonettverschluss entstehen.

## Patentansprüche

1. BLDC-Motorbaugruppe (1), mit einer Stator-Spuleneinrichtung (14) und einer relativ zu dieser Stator-Spuleneinrichtung (14) drehbar gelagerten Motorwelle (16), die drehfest mit einem Rotor-Magnetpaket (12) gekoppelt ist, wobei die Motorwelle (16) über eine Lageranordung (24,26) drehbar gelagert ist, wobei die Lageranordnung (24,26) ein Loslager (24) und ein Festlager (26) aufweist, wobei das Loslager in radialer Richtung Kräfte übertragen kann und das Festlager sowohl in radialer als auch in axialer Richtung Kräfte übertragen kann, und ein Stecker-Leadframe (28) vorgesehen ist, wobei das Stecker-Leadframe (28) einen Lageraufnahmebereich (40) aufweist, an dem sich das Festlager (26) in axialer sowie radialer Richtung abstützt, und zwar indem sich das Festlager (26) in beiden axialen Orientierungen am Stecker-Leadframe (28) abstützt , der Stecker-Leadframe (28) den elektrischen Anschluss der Motorbaugruppe bildet, und der Stecker-Leadframe (28) eine Platine (38) mit Sensoren zur Ermittlung der Lage- und / oder Richtung und / oder Drehzahl des Rotors aufnimmt.

2. BLDC-Motorbaugruppe nach Anspruch 1, **dadurch gekennzeichnet, dass** ein Gehäuseteil eines Gehäuses (48) und das Stecker-Leadframe (28) über eine mittels eines Warmverprägeverfahrens erzeugte Verbindung gekoppelt sind.

3. BLDC-Motorbaugruppe (1) nach einem der Ansprüche 1 oder 2, **dadurch gekennzeichnet, dass** das Festlager (26) in das Stecker-Leadframe (28) eingespritzt ist.

4. BLDC-Motorbaugruppe (1) nach einem der Ansprüche 1 bis 3, **dadurch gekennzeichnet, dass** die BLDC-Motorbaugruppe (1) wenigstens eine angespritzte Dichteinrichtung (60, 58) aufweist.

5. BLDC-Motorbaugruppe nach einem der Ansprüche 1 bis 4, **dadurch gekennzeichnet, dass** das Loslager (24) axial zwischen dem abtriebsseitigen Ende der Motorwelle (16) und dem Festlager (26) angeordnet ist.

6. BLDC-Motorbaugruppe (1) nach Anspruch 5, **dadurch gekennzeichnet, dass** der Außendurchmesser des Loslagers (24) kleiner ist als der Innendurchmesser der Stator-Spuleneinrichtung (14), so dass dieses Loslager (24) durch die Stator-Spuleneinrichtung (14) geschoben werden kann.

7. BLDC-Motorbaugruppe (1) nach einem der Ansprüche 1 bis 6, **dadurch gekennzeichnet, dass** das Stecker-Leadframe (28) mittels einer Klemmeinrichtung im Gehäuse (48) fixiert ist.

8. BLDC-Motorbaugruppe (1) nach einem der Ansprüche 1 bis 7, **dadurch gekennzeichnet, dass** der Stecker-Leadframe (28) mit einem Stanzgitter (34, 36) vorgesehen ist und die Stator-Spuleneinrichtung (14) mit diesem Stanzgitter (34, 36) elektrisch leitend verbunden ist, wobei diese elektrisch leitende Verbindung so ist, dass sie im Rahmen der Montage der BLDC-Motorbaugruppe (1) eine zumindest beschränkte Relativverdrehung des Stecker-Leadframes (28) gegenüber der Stator-Spuleneinrichtung (14) zulässt.

9. BLDC-Motorbaugruppe (1) nach einem der Ansprüche 1 bis 8, **dadurch gekennzeichnet, dass** die Motorwelle (16) einen im Bereich ihrer Oberfläche gelegenen ersten Bereich aufweist, der dazu bestimmt ist, mit einem anzutreibenden Umbauteil gekoppelt zu werden, wobei die Rotorwelle (16) ferner einen von diesem ersten Bereich räumlich getrennten, im Bereich ihrer Oberfläche gelegenen zweiten Bereich aufweist, der als Mitnahmegeometrie (46) gestaltet ist, so dass mittels eines Werkzeugs oder werkzeugfrei die Motorwelle (16) in einem Notbetrieb verdreht werden kann, wenn die Stromversorgung der Stator-Spuleneinrichtung (14) unterbrochen ist.

10. BLDC-Motorbaugruppe (1) nach Anspruch 9, **dadurch gekennzeichnet, dass** die Mitnahmegeometrie (46) nicht-zylindrisch und / oder nichtrotationssymmetrisch gestaltet ist.

11. BLDC-Motorbaugruppe (1) nach einem der Ansprüche 9 und 10. **dadurch gekennzeichnet, dass** zumindest ein Abschnitt der Kontur der Mitnahmegeometrie durch ein Umformungsverfahren geformt ist.

12. BLDC-Motorbaugruppe (1) nach einem der Ansprüche 9 bis 11, **dadurch gekennzeichnet, dass** die Mitnahmegeometrie (46) auf einer Außenmantelfläche der Motorwelle (16) angeordnet ist.

13. BLDC-Motorbaugruppe (1) nach einem der Ansprüche 9 bis 12, **dadurch gekennzeichnet, dass** die Mitnahmegeometrie (46) sich in der Motorwelle (16) von deren Stirnseite aus erstreckt.

14. BLDC-Motorbaugruppe (1) nach einem der Ansprüche 9 bis 13, **dadurch gekennzeichnet, dass** die Mitnahmegeometrie (46) einen mit Ecken versehenen Querschnitt aufweist.

15. BLDC-Motorbaugruppe (1) nach einem der Ansprüche 9 bis 14, **dadurch gekennzeichnet, dass** die Mitnahmegeometrie (46) als Innen- oder als Außen-Sechskant gestaltet ist.

16. BLDC-Motorbaugruppe (1) nach einem der Ansprüche 9 bis 15, **dadurch gekennzeichnet, dass** die Mitnahmegeometrie (46) als Torx gestaltet ist.

17. BLDC-Motorbaugruppe (1) nach einem der Ansprüche 9 bis 16, **dadurch gekennzeichnet, dass** die BLDC-Motorbaugruppe (1) in einem Gehäuse (48) angeordnet ist, das einen lösbaren, gegebenenfalls abgedichteten Gehäuseabschnitt (56) aufweist oder einen durch Zerstörung entfernbaren Gehäuseabschnitt (56), der zumindest teilweise von geschwächten Wandbereichen begrenzt wird, und dieser Gehäuseabschnitt (56) im Bereich der Mitnahmegeometrie (46) angeordnet ist, um diese Mitnahmegeometrie (46) für einen Notbetrieb zugänglich zu machen.

## Claims

1. BLDC motor subassembly (1), comprising a stator coil device (14) and a motor shaft (16), which is rotatably mounted in relation to this stator coil device (14) and is coupled to a rotor magnet stack (12) in a rotationally fixed manner, the motor shaft (16) being rotatably mounted by way of a bearing arrangement (24, 26), the bearing arrangement (24, 26) having a movable bearing (24) and a fixed bearing (26), the movable bearing being able to transfer forces in a radial direction and the fixed bearing being able to transfer forces both in a radial direction and in an axial direction, and a connector leadframe (28) being provided, the connector leadframe (28) having a bearing receiving region (40), on which the fixed bearing (26) is supported in the axial and radial directions, to be precise in that the fixed bearing (26) is supported on the connector leadframe (28) in both axial orientations, the connector leadframe (28) forming the electrical connection of the motor subassembly, and the connector leadframe (28) receiving a board (38) with sensors for determining the position and/or direction and/or rotational speed of the rotor.

2. BLDC motor subassembly according to Claim 1, **characterized in that** a housing part of a housing (48) and the connector leadframe (28) are coupled by way of a connection created by means of a hot stamping process.

3. BLDC motor subassembly (1) according to either of Claims 1 and 2, **characterized in that** the fixed bearing (26) is integrally moulded in the connector leadframe (28).

4. BLDC motor subassembly (1) according to one of Claims 1 to 3, **characterized in that** the BLDC motor subassembly (1) has at least one moulded-on sealing device (60, 58).

5. BLDC motor subassembly according to one of Claims 1 to 4, **characterized in that** the movable bearing (24) is arranged axially between the output-side end of the motor shaft (16) and the fixed bearing (26).

6. BLDC motor subassembly (1) according to Claim 5, **characterized in that** the outside diameter of the movable bearing (24) is less than the inside diameter of the stator coil device (14), so that this movable bearing (24) can be pushed through the stator coil device (14).

7. BLDC motor subassembly (1) according to one of Claims 1 to 6, **characterized in that** the connector leadframe (28) is fixed in the housing (48) by means of a clamping device.

8. BLDC motor subassembly (1) according to one of Claims 1 to 7, **characterized in that** the connector leadframe (28) is provided with a stamped grid (34, 36) and the stator coil device (14) is connected to this stamped grid (34, 36) in an electrically conducting manner, this electrically conducting connection being such that it allows an at least restricted relative turning of the connector leadframe (28) with respect to the stator coil device (14) in the course of the assembly of the BLDC motor subassembly (1).

9. BLDC motor subassembly (1) according to one of Claims 1 to 8, **characterized in that** the motor shaft (16) has a first region, located in the region of its surface, which is intended to be coupled to a conversion part to be driven, the motor shaft (16) also having a second region, located in the region of its surface, which is spatially separate from the first region and is designed as a driving geometry (46), so that by means of a tool or without a tool the motor shaft (16) can be turned in emergency operation if the power supply to the stator coil device (14) is interrupted.

10. BLDC motor subassembly (1) according to Claim 9, **characterized in that** the driving geometry (46) is of a non-cylindrical and/or non-rotationally symmetrical design.

11. BLDC motor subassembly (1) according to either of Claims 9 and 10, **characterized in that** at least a portion of the contour of the driving geometry is formed by a shaping process.

12. BLDC motor subassembly (1) according to one of Claims 9 to 11, **characterized in that** the driving geometry (46) is arranged on an outer lateral surface of the motor shaft (16).

13. BLDC motor subassembly (1) according to one of Claims 9 to 12, **characterized in that** the driving geometry (46) extends in the motor shaft (16) from one end face.

14. BLDC motor subassembly (1) according to one of Claims 9 to 13, **characterized in that** the driving geometry (46) has a cross section provided with corners.

15. BLDC motor subassembly (1) according to one of Claims 9 to 14, **characterized in that** the driving geometry (46) is designed as an internal or external hexagon.

16. BLDC motor subassembly (1) according to one of Claims 9 to 15, **characterized in that** the driving geometry (46) is designed as a Torx.

17. BLDC motor subassembly (1) according to one of Claims 9 to 16, **characterized in that** the BLDC motor subassembly (1) is arranged in a housing (48), which has a detachable, possibly sealed-off, housing portion (56) or a housing portion (56) that is at least partially bounded by weakened wall regions and can be destructively removed, and this housing portion (56) is arranged in the region of the driving geometry (46), in order to make this driving geometry (46) accessible for emergency operation.

## Revendications

1. Module de moteur BLDC (1), comprenant un dispositif de bobine de stator (14) et un arbre de moteur (16) monté de manière à pouvoir tourner par rapport à ce dispositif de bobine de stator (14), lequel arbre de moteur est accouplé de manière solidaire en rotation à un paquet d'aimants de rotor (12), l'arbre de moteur (16) étant supporté à rotation par le biais d'un agencement de palier (24, 26), l'agencement de palier (24, 26) présentant un palier fou (24) et un palier fixe (26), le palier fou pouvant transmettre des forces dans la direction radiale et le palier fixe pouvant transmettre des forces à la fois dans la direction radiale et dans la direction axiale, et une grille de connexion pour connecteurs enfichables (28) étant prévue, la grille de connexion pour connecteurs enfichables (28) présentant une région de réception de palier (40) sur laquelle s'appuie le palier fixe (26) dans la direction axiale et dans la direction radiale, en particulier le palier fixe (26) s'appuyant dans les deux orientations axiales sur la grille de connexion pour connecteurs enfichables (28), la grille de connexion pour connecteurs enfichables (28) formant le raccord électrique du module de moteur, et la grille de connexion pour connecteurs enfichables (28) recevant une carte à circuits imprimés (38) avec des capteurs pour détecter la position et/ou le sens et/ou la vitesse de rotation du rotor.

2. Module de moteur BLDC selon la revendication 1, **caractérisé en ce qu'**une partie de boîtier d'un boîtier (48) et la grille de connexion pour connecteurs enfichables (28) sont accouplées par le biais d'une connexion produite au moyen d'un procédé d'estampage à chaud.

3. Module de moteur BLDC (1) selon l'une quelconque des revendications 1 ou 2, **caractérisé en ce que** le palier fixe (26) est moulé par injection dans la grille de connexion pour connecteurs enfichables (28).

4. Module de moteur BLDC (1) selon l'une quelconque des revendications 1 à 3, **caractérisé en ce que** le module de moteur BLDC (1) présente au moins un dispositif d'étanchéité surmoulé (60, 58).

5. Module de moteur BLDC (1) selon l'une quelconque des revendications 1 à 4, **caractérisé en ce que** le palier fou est disposé axialement entre l'extrémité du côté de la sortie de l'arbre de moteur (16) et le palier fixe (26).

6. Module de moteur BLDC (1) selon la revendication 5, **caractérisé en ce que** le diamètre extérieur du palier fou (24) est inférieur au diamètre intérieur du dispositif de bobine de stator (14), de sorte que ce palier fou (24) puisse être poussé par le dispositif de bobine de stator (14).

7. Module de moteur BLDC (1) selon l'une quelconque des revendications 1 à 6, **caractérisé en ce que** la grille de connexion pour connecteurs enfichables (28) est fixée au moyen d'un dispositif de serrage dans le boîtier (48).

8. Module de moteur BLDC (1) selon l'une quelconque des revendications 1 à 7, **caractérisé en ce que** la grille de connexion pour connecteurs enfichables (28) est pourvue d'une grille estampée (34, 36) et le dispositif de bobine de stator (14) est connecté de manière électriquement conductrice à cette grille estampée (34, 36), cette connexion électriquement conductrice étant telle qu'elle permette, dans le cadre du montage du module de moteur BLDC (1), une rotation relative au moins limitée de la grille de connexion pour connecteurs enfichables (28) par rapport au dispositif de bobine de stator (14).

9. Module de moteur BLDC (1) selon l'une quelconque des revendications 1 à 8, **caractérisé en ce que** l'arbre de moteur (16) présente une première région placée dans la région de sa surface, laquelle est prévue pour être accouplée à une pièce de remplacement devant être entraînée, l'arbre de moteur (16) présentant en outre une deuxième région située dans la région de sa surface, séparée spatialement de cette première région, laquelle est configurée sous forme de géométrie d'entraînement (46), de sorte qu'au moyen d'un outil ou sans l'utilisation d'outils, l'arbre de moteur (16) puisse être tourné dans un mode de secours lorsque l'alimentation électrique du dispositif de bobine de stator (14) est interrompue.

10. Module de moteur BLDC (1) selon la revendication 9, **caractérisé en ce que** la géométrie d'entraînement (46) est configurée de manière non cylindrique et/ou sans symétrie de révolution.

11. Module de moteur BLDC (1) selon l'une quelconque des revendications 9 et 10, **caractérisé en ce qu'**au moins une portion du contour de la géométrie d'entraînement est formée par un processus de formage par déformation.

12. Module de moteur BLDC (1) selon l'une quelconque des revendications 9 à 11, **caractérisé en ce que** la géométrie d'entraînement (46) est disposée sur une surface d'enveloppe extérieure de l'arbre de moteur (16).

13. Module de moteur BLDC (1) selon l'une quelconque des revendications 9 à 12, **caractérisé en ce que** la géométrie d'entraînement (46) s'étend dans l'arbre de moteur (16) depuis son côté frontal.

14. Module de moteur BLDC (1) selon l'une quelconque des revendications 9 à 13, **caractérisé en ce que** la géométrie d'entraînement (46) présente une section transversale avec des coins.

15. Module de moteur BLDC (1) selon l'une quelconque des revendications 9 à 14, **caractérisé en ce que** la géométrie d'entraînement (46) est configurée sous forme de géométrie à six pans interne ou externe.

16. Module de moteur BLDC (1) selon l'une quelconque des revendications 9 à 15, **caractérisé en ce que** la géométrie d'entraînement (46) est configurée sous forme de profil Torx.

17. Module de moteur BLDC (1) selon l'une quelconque des revendications 9 à 16, **caractérisé en ce que** le module de moteur BLDC (1) est disposé dans un boîtier (48) qui présente une portion de boîtier détachable, éventuellement étanchéifiée (56) ou une portion de boîtier (56) pouvant être enlevée de manière destructive, laquelle est limitée au moins en partie par des régions de paroi affaiblies, et cette portion de boîtier (56) est disposée dans la région de la géométrie d'entraînement (46), afin de permettre l'accès à cette géométrie d'entraînement (46) en mode de secours.
